# EUROPÄISCHE PATENTANMELDUNG

(11) **EP 1 787 853 A1**
(43) Veröffentlichungstag der Anmeldung: **23.05.2007**
(21) Anmeldenummer: 05405650.2
(22) Anmeldetag: 21.11.2005
(51) Int. Cl.: B60M 1/20

(54) **Tragwerk für eine Fahrleitung**

(71) Anmelder: Furrer + Frey AG, 3005 Bern (CH)
(72) Erfinder: Furrer, Beat, 3012 Bern (CH); Nünlist, Felix, 3037 Herrenschwanden (CH); Wäckerlig, Walter, 3292 Busswil (CH)
(74) Vertreter: AMMANN PATENTANWÄLTE AG BERN

(57) **Zusammenfassung**

Das Tragwerk für eine Fahrleitung in einem Tunnel oder Überbau umfasst einen länglichen, sich in einer Längsrichtung erstreckenden Isolator (21), der an der Decke (11) des Tunnels oder Überbaus befestigbar ist, einen Tragarm (23) mit einer Tragseilhalterung (33), und einen Spurhalter (24) mit einer Fahrdrahthalterung, der mit dem Tragarm verbunden ist. Der Isolator ist quer zu seiner Längsrichtung mit dem Tragarm verbunden, sodass sich ein in der Fahrdrahthalterung gehaltener Fahrdraht (14) und die Längsrichtung des Isolators in der Projektion auf die Horizontale im Wesentlichen in dieselbe Richtung erstrecken. Das Tragwerk weist einen geringeren Platzbedarf zwischen Fahrdraht und Decke auf.

## Beschreibung

Die vorliegende Erfindung bezieht sich auf ein Tragwerk für eine Fahrleitung in einem Tunnel oder Überbau gemäss Oberbegriff des Patentanspruchs 1.

Zur Stromversorgung von elektrischen Triebfahrzeugen dienen über dem Geleise angeordnete Fahrleitungen. In Tunnels und Überbauten sind die Platzverhältnisse in der Regel beschränkt, sodass kompakte Tragwerke vorzusehen sind, um die Fahrleitung in der gewünschten Höhe über dem Geleise anbringen zu können. Zur Vermeidung von elektrischen Überschlägen dürfen die Tragwerke jedoch nicht zu nahe an der Gewölbenwand befestigt werden. Bei 15 kV beispielsweise beträgt der minimale elektrische Schutzabstand, welcher zwischen den spannungsführenden Teilen des Tragwerks und der Gewölbenwand einzuhalten ist, 15 cm.

Aus der Patentschrift CH 691 294 A5 der gleichen Anmelderin ist ein äusserst gedrungenes Tragwerk bekannt, welches besonders in engen Tunnels einsetzbar ist. Jedoch benötigt das Tragwerk relativ viel Platz zwischen Fahrdraht und Gewölbendecke. Bei allzu niederen Tunnels oder Überbauten ist ein derartiges Tragwerk nicht einsetzbar, da der Abstand zwischen Gleis und Fahrdraht für die Durchfahrt eines Triebfahrzeuges zu gering ist.

Ausgehend von diesem Stand der Technik liegt eine Aufgabe der vorliegenden Erfindung darin, ein Tragwerk mit einem geringeren Platzbedarf zwischen Fahrdraht und Decke eines Tunnel oder Überbaus anzugeben.

Ein Tragwerk, das diese Aufgabe löst, ist im Anspruch 1 angegeben. Die weiteren Ansprüche geben bevorzugte Ausführungen sowie eine Anordnung in einem Tunnel oder Überbau an.

Die Erfindung wird im Folgenden anhand eines bevorzugten Ausführungsbeispiels unter Bezugnahme auf Figuren erläutert.

Es zeigen
Fig. 1 eine Vorderansicht eines bekannten Tragwerks in einem Gewölbe;
Fig. 2 eine teilweise geschnittene Draufsicht des Tragwerks gemäss Fig. 1;
Fig. 3 eine Vorderansicht eines erfindungsgemässen Tragwerks in dem Gewölbe gemäss Fig. 1;
Fig. 4 eine teilweise geschnittene Draufsicht des Tragwerks gemäss Fig. 3; und
Fig. 5 eine teilweise geschnittene Seitenansicht des Tragwerks gemäss Fig. 3.

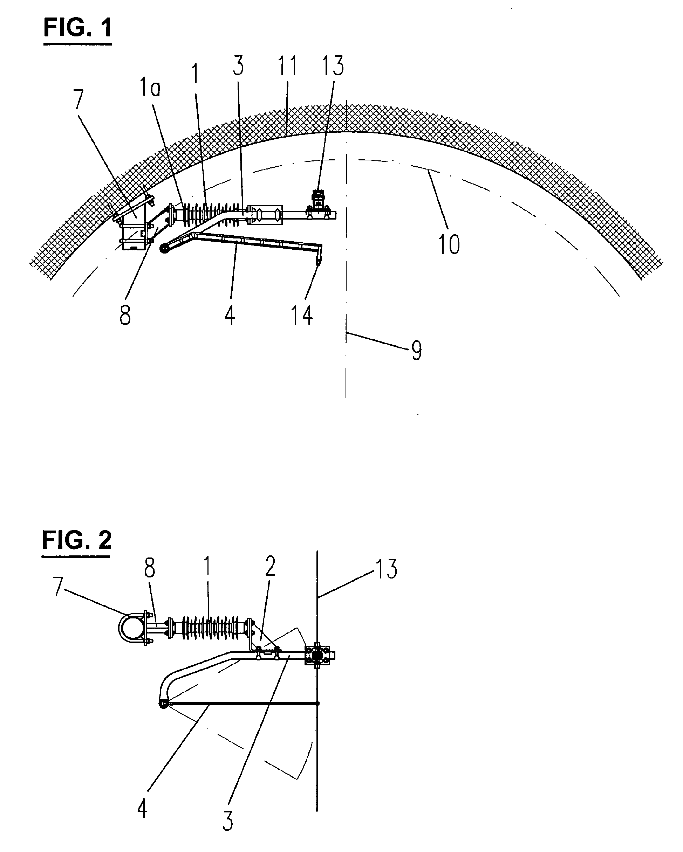

Bei dem in den Fig. 1 und 2 gezeigten bekannten Tragwerk ist der Isolator 1 über ein Winkelstück 2 mit einem Tragarm 3 verbunden, welcher ein Tragseil 13 sowie einen Spurhalter 4 mit einem Fahrdraht 14 trägt. Seitlich vom Tragarm 3 befindet sich eine Hängestütze 7, an welchem der Isolator 1 über ein nach oben weisendes Zwischenstück 8 befestigt ist. In der horizontalen Projektion gemäss Fig. 1 ist der Isolator 1 rechtwinklig zur Richtung angeordnet, in welche sich das Tragseil 13 bzw. der Fahrdraht 14 und somit das Geleise erstrecken. Zwischen zwei benachbarten Tragwerken ist der Fahrdraht 14 über Hängedrähte (nicht dargestellt) mit dem in Form einer Kettenlinie durchhängenden Tragseil 13 verbunden.

Die vertikale gestrichelte Linie 9 definiert die Gleisachse. Die parallel zur Wand 11 verlaufende gestrichelte Linie 10 definiert den minimalen elektrischen Schutzabstand, welcher zwischen den spannungsführenden Teilen des Tragwerks und dem Gewölbe 11 einzuhalten ist. Im Allgemeinen beträgt dieser Schutzabstand 1 cm pro 1 kV. Bei einer Spannung von 15 kV beispielsweise ist der minimale Schutzabstand 15 cm. Wie in Fig. 1 ersichtlich, liegt das linke Ende 1a des Isolators 1, welcher als spannungsführend gilt, am nächsten zur Wand 11 und bestimmt somit die maximale Höhe, in welcher das Tragwerk über dem Geleise montiert werden darf.

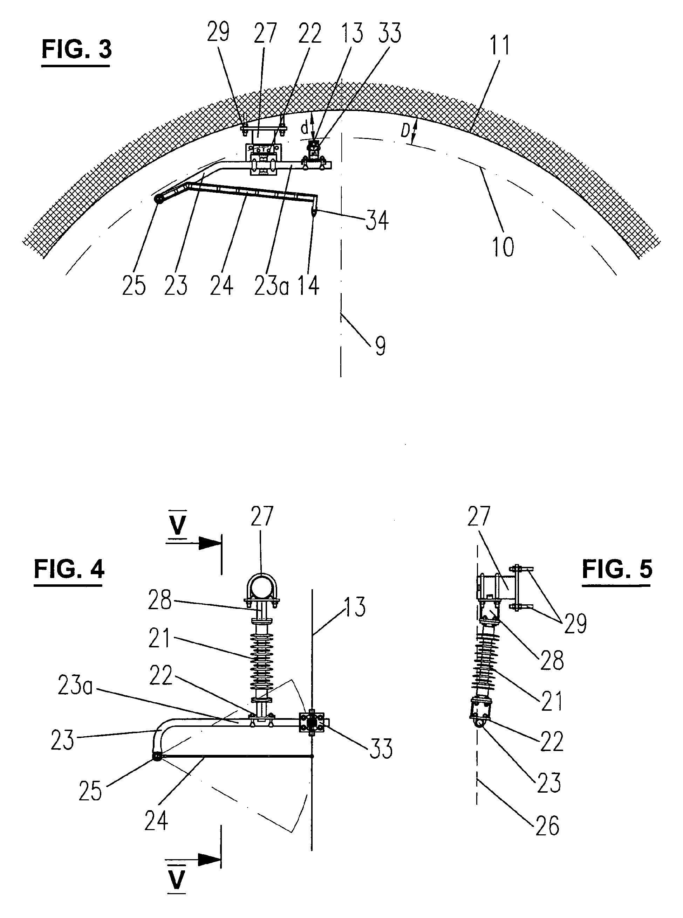

Fig. 3 zeigt denselben Gewölbenquerschnitt wie Fig. 1. Das in den Fig. 3 - 5 gezeigte Tragwerk umfasst einen länglichen Isolator 21, dessen eines Ende an einem Anschlussstück 28 festgeschraubt und dessen anderes Ende mit einem Tragarm 23 verbunden ist. Das Anschlussstück 28 ist mittels Schellen im Wesentlichen rechtwinklig an einer Hängestütze 27 fixiert. Der Isolator 21 ragt somit zumindest teilweise weiter nach unten als die Hängestütze 27 (vgl. Linie 26 in Fig. 5). Diese ist mittels Befestigungsbolzen 29 an der Decke 11 befestigt.

Der Tragarm 23 ist stabförmig ausgebildet und umfasst einen geraden Abschnitt 23a, der am Isolator 21 im Wesentlichen rechtwinklig befestigt ist. Vorzugsweise ist der Tragarm 23 als Rohr ausgebildet. Zur Befestigung dient ein am Isolator 21 festgeschraubter Flansch 22, an welchem den Abschnitt 23a umschliessende Schellen festgeschraubt sind.

An dem einen Ende des Tragarms 23 befindet sich die Tragseilhalterung 33 in Form eines Tragseilbocks. Das andere Ende des Tragarms 23 ist mittels Gelenk 25 mit einem Spurhalter 24 verbunden, welcher endseitig eine Fahrdrahthalterung 34 zum Halten des Fahrdrahtes 14 aufweist. Der Spurhalter 24 ist durch das gelenkige Anbringen in der vertikalen sowie horizontalen Richtung verschwenkbar. Dadurch sind Änderungen in der Fahrdrahtlage ausgleichbar, welche z.B. beim Durchgang des Stromabnehmers eines Triebfahrzeugs oder aufgrund von Schwankungen in der Länge des Tragseils 13 oder Fahrdrahts 14 entstehen.

In der horizontalen Projektion gesehen, erstreckt sich der Isolator 21 in seiner Längsrichtung im Wesentlichen in dieselbe Richtung wie der Fahrdraht 14 und somit wie das Geleise, während Tragarm 23 und Spurhalter 24 quer zum Isolator 21 angeordnet sind.

Um das Einschleifen von Rillen in den Stromabnehmer zu verhindern, erstreckt sich der Fahrdraht 14 in der horizontalen Projektion gesehen nicht exakt in Fahrtrichtung, sondern verläuft etwas im Zickzack. Zu diesem Zweck werden die Tragwerke in abwechselnder Reihenfolge einmal links und einmal rechts von der Gleisachse 9 am Gewölbe montiert. In Fig. 3 ist das Tragwerk links von der Gleisachse 9 angeordnet. Befindet es sich rechts davon, so sind die Hängestütze 27 und der Isolator 21 rechts von der Gleichsachse 9 am Gewölbe 11 angebracht, während der Tragarm 23 mit dem Spurhalter 24 gegenüber der in Fig. 3 gezeigten Anordnung um 180 Grad gedreht am Isolator 21 befestigt ist.

Je nach Platzverhältnissen ist es denkbar, zwischen zwei Tragwerken der in Fig. 3 gezeigten Art ein oder mehrere Tragwerke ohne Spurhalter 24 vorzusehen. Bei diesen Tragwerken hängt der Fahrdraht 14 über die Hängedrähte direkt am Tragseil 13. Dabei ist der Isolator 21 gegen die Gleisachse 9 eingeschwenkt, um den Zickzackverlauf des Fahrdrahts 14 zu erzielen.

Eine optimale Ausnützung der Platzverhältnisse wird erzielt, wenn die spannungsführenden Teile möglichst nahe an der Grenze montiert werden können, welche durch den minimalen elektrischen Schutzabstand definiert ist. Im Unterschied zum Tragwerk gemäss Fig. 1 sind beim Tragwerk gemäss Fig. 3 insbesondere das Tragseil 13 und der Fahrdraht 14 näher bei der Decke 11 befestigt. Der Abstand d zwischen der Decke 11 und des Tragseilabschnitts, welches in der Tragseilhalterung 33 gehalten ist, kann so gewählt sein, dass d höchstens 130 Prozent oder höchstens 110 Prozent des minimalen elektrischen Schutzabstandes D beträgt. Bei Bedarf kann d im Wesentlichen gleich D sein, wie dies in Fig. 3 illustriert ist.

Das erfindungsgemässe Tragwerk weist u.a. folgende Vorteile auf:
- Die Anordnung des Isolators quer zum Tragarm und somit im Wesentlichen parallel zum Geleise erlaubt es, das gesamte Tragwerk näher zum Gewölbe anzubringen und somit den Fahrdraht höher über dem Geleise anzuordnen, ohne dass dabei der minimale elektrische Schutzabstand unterschritten wird. Im Vergleich zum Tragwerk gemäss Fig. 1 kann bei einem minimalen Schutzabstand von 150 mm der Fahrdraht um 50 mm höher gelegt werden.
- Das Tragwerk ist insbesondere bei bestehenden Tunnels oder Überbauten geeignet, ohne Vergrösserung ihres Querschnitts den Fahrdraht höher anzubringen. Dadurch ist z.B. ein nachträglicher Ausbau für die Durchfahrt von Doppelstockwagen möglich.
- Führung und Haltung von Fahrdraht und Tragseil, insbesondere ihr Abstand dazwischen ("Systemhöhe"), sind im Wesentlichen gleich wie beim Tragwerk gemäss Fig. 1. Das Verhalten der Fahrleitung bei Belastungen bleibt somit unverändert.
- Der Isolator ist weniger stark belastet als beim Tragwerk gemäss Fig. 1, bei welchem der Isolator rechtwinklig zum Fahrdraht bzw. Geleise angeordnet ist.

Aus der vorangehenden Beschreibungen sind dem Fachmann zahlreiche Abwandlungen zugänglich, ohne den Schutzbereich der Erfindung zu verlassen, der durch die Ansprüche definiert ist.

Fig. 3 - 5 zeigen das Tragwerk in einem einspurigen Tunnel. Natürlich ist das erfindungsgemässe Tragwerk auch in einem Überbau oder mehrspurigen Tunnel einsetzbar. Das Tragwerk ist geeignet, um Fahrleitungen für unterschiedliche Triebfahrzeuge wie Eisenbahnen oder U-Bahnen zu halten.

## Patentansprüche

1. Tragwerk für eine Fahrleitung in einem Tunnel oder Überbau, umfassend
einen länglichen, sich in einer Längsrichtung erstreckenden Isolator (21), der an der Decke (11) des Tunnels oder Überbaus befestigbar ist,
einen Tragarm (23) mit einer Tragseilhalterung (33),
und einen Spurhalter (24) mit einer Fahrdrahthalterung (34), der mit dem Tragarm verbunden ist,
**dadurch gekennzeichnet, dass** der Isolator quer zu seiner Längsrichtung mit dem Tragarm verbunden ist, sodass sich ein in der Fahrdrahthalterung gehaltener Fahrdraht (14) und die Längsrichtung des Isolators in der Projektion auf die Horizontale im Wesentlichen in dieselbe Richtung erstrecken.

2. Tragwerk nach Anspruch 1, **dadurch gekennzeichnet, dass** der Tragarm (23) einen geraden stabförmigen Abschnitt (23a) umfasst, welcher am Isolator (21) befestigt ist und welcher im Wesentlichen rechtwinklig zur Längsrichtung des Isolators angeordnet ist.

3. Tragwerk nach Anspruch 2, **dadurch gekennzeichnet, dass** der Abschnitt (23a) röhrenförmig ist.

4. Tragwerk nach einem der Ansprüche 1 bis 3, **dadurch gekennzeichnet, dass** es eine Hängestütze (27) umfasst, an welcher der Isolator (21) mittels Anschlussstück (28) befestigt ist, wobei das Anschlussstück im Wesentlichen rechtwinklig an der Hängestütze befestigt ist.

5. Tragwerk nach einem der Ansprüche 1 bis 4, **dadurch gekennzeichnet, dass** die Tragseilhalterung (33) so angeordnet ist, dass sich ein in der Tragseilhalterung gehaltenes Tragseil (13) und die Längsrichtung des Isolators (21) in der Projektion auf die Horizontale im Wesentlichen in dieselbe Richtung erstrecken.

6. Tragwerk nach einem der Ansprüche 1 bis 5, **dadurch gekennzeichnet, dass** der Spurhalter (24) gelenkig mit dem Tragarm (23) verbunden ist und vorzugsweise horizontal und vertikal verschwenkbar ist.

7. Anordnung in einem Tunnel oder Überbau mit mindestens einem Tragwerk nach einem der vorangehenden Ansprüchen.

8. Anordnung nach Anspruch 7, **dadurch gekennzeichnet, dass** die Längsrichtung des Isolators (21) sich im Wesentlichen in Richtung des Geleises erstreckt.

9. Anordnung nach Anspruch 7 oder 8, **dadurch gekennzeichnet, dass** der Abstand d zwischen der Decke (11) des Tunnels oder Überbaus und des Tragseilabschnitts, welches in der Tragseilhalterung (33) gehalten ist, höchstens 130 % des minimalen elektrischen Schutzabstandes D beträgt, bevorzugt ist d höchstens 110 % von D und besonders bevorzugt ist d im Wesentlichen gleich D.
